# EUROPÄISCHE PATENTSCHRIFT

(11) **EP 3 814 652 B1**
(45) Veröffentlichungstag und Bekanntmachung des Hinweises auf die Patenterteilung: **24.08.2022**
(21) Anmeldenummer: 19736298.1
(22) Anmeldetag: 24.06.2019
(51) Int. Cl.: F16F 15/26

(54) **UNWUCHTWELLE**
UNBALANCED SHAFT
ARBRE À BALOURD

(30) Priorität: 27.06.2018 DE 102018115429
(43) Veröffentlichungstag der Anmeldung: 05.05.2021
(73) Patentinhaber: Schaeffler Technologies AG & Co. KG, 91074 Herzogenaurach (DE)
(72) Erfinder: FARIA, Christof, 91054 Erlangen (DE)
(86) Internationale Anmeldenummer: PCT/DE2019/100579
(87) Internationale Veröffentlichungsnummer: WO 2020/001699

(56) Entgegenhaltungen:
- EP-A1- 3 043 088
- DE-A1-102008 015 135
- DE-A1-102008 038 012
- DE-A1-102016 210 480

## Beschreibung

Die Erfindung betrifft eine Unwuchtwelle zum Ausgleich von Massenkräften und/oder Massenmomenten einer Brennkraftmaschine, umfassend:
- eine Trägerwelle mit einem Lagerabschnitt,
- ein auf dem Lagerabschnitt angeordnetes Spannteil, das der Lagerabschnitt formschlüssig gegen Verdrehen um die Drehachse der Unwuchtwelle sichert,
- und einen den Lagerabschnitt und das Spannteil umschließenden Lagerring, den das Spannteil radial zur Drehachse gegen den Lagerabschnitt spannt.

Die aus Gründen der Reibleistungsreduzierung zunehmende Umstellung von hydrodynamisch gleitgelagerten auf wälzgelagerte Unwuchtwellen zum Massenausgleich einer Brennkraftmaschine erfordert konstruktive Änderungen an den Wellen, die der spezifischen Wälzbelastung der Lagerstellen Rechnung tragen. Die erforderliche Wälzfestigkeit kann bei einteilig hergestellten Wellen üblicherweise nur durch Schmieden erzielt werden, wobei dieses Herstellverfahren gegenüber den gleitgelagerten Stahlgusswellen mit höheren Kosten verbunden ist.

Eine dieses Problem adressierende Unwuchtwelle der eingangs genannten Art ist aus der DE 10 2016 210 480 A1 bekannt. Die Trägerwelle als Wellengrundkörper kann ein vergleichsweise kostengünstig herstellbares Guss- oder Sinterteil sein, das lediglich im Bereich der die radialen Lagerstellen bildenden Lagerabschnitte von wälzfesten Lagerringen umschlossen ist. Zur Befestigung der Lagerringe ist jeweils ein (elastisches) Spannteil vorgeschlagen, das zwischen dem Lagerring und dem Lagerabschnitt eingespannt ist und den Lagerring radial gegen den Lagerabschnitt verspannt.

Hierzu alternative Unwuchtwellen mit starr und nicht zerstörungsfrei lösbar befestigten Lagerringen sind beispielsweise aus der EP 2 426 374 B1, DE 102 07 452 A1, EP 2 459 899 B1 und DE 10 2008 018 545 A1 bekannt.

Der vorliegenden Erfindung liegt die Aufgabe zugrunde, eine Unwuchtwelle der eingangs genannten Art mit verbesserter Lagerringbefestigung anzugeben.

Diese Aufgabe wird durch die Merkmale des Anspruchs 1 gelöst. Demnach soll das Spannteil den Lagerring formschlüssig gegen Verdrehen um die Drehachse sichern. Die formschlüssige Verdrehsicherung des Lagerrings relativ zur Trägerwelle und zum Spannteil ergänzt den durch die Spannkräfte des elastisch verformten Spannteils wirkenden (Reib-)Kraftschluss des Lagerrings mit dem Spannteil und dem Lagerabschnitt. Damit wird sicher ausgeschlossen, dass die Kontaktreibung der auf dem Lagerring abwälzenden Wälzkörper und auch massenträgheitsbedingte Drehmomentspitzen des typischerweise mit doppelter Kurbelwellendrehzahl rotierenden Lagerrings zu dessen Verdrehung mit unkontrolliertem Drehschlupf auf dem Spannteil und dem Lagerabschnitt führen. Der verhinderte Drehschlupf des Lagerrings beugt vorzeitigem Lagerverschleiß vor.

Vorteilhafte Ausgestaltungen der Erfindung sind Gegenstand der abhängigen Ansprüche.

Die formschlüssige Verdrehsicherung des Lagerrings kann durch einen sich radial zur Drehachse erstreckenden Vorsprung am Spannteil und eine (axial) stirnseitige Aussparung im Lagerring gebildet sein, wobei der Vorsprung in die Aussparung eingreift.

Die formschlüssige Verdrehsicherung des Lagerrings wird alternativ durch eine Schnappverbindung erzeugt, wobei ein sich radial zur Drehachse erstreckender Vorsprung am Spannteil in eine Aussparung im Lagerring eingeschnappt ist. Das elastisch verformbare Spannteil ist zweckmäßigerweise ein Kunststoffspritzgießteil mit dem daran angespritzten Vorsprung. Die Aussparung im Lagerring kann durch Lochstanzen hergestellt sein.

Der Vorsprung kann eine Öffnung haben, die das Lagerringinnere mit dem Lagerringäußeren verbindet. Hierdurch wird der Zutritt von Schmierölnebel in den axial inneren Bereich des Wälzkontakts erleichtert.

In einer ersten Variante der Schnappverbindung soll sich der Vorsprung von einer radial zur Drehachse federnd am Spannteil angelenkten Lasche erstrecken. Die Biegeachse der Lasche kann entweder parallel oder senkrecht zur Drehachse der Unwuchtwelle verlaufen. Die umfängliche Steifigkeit der Lasche ist im Falle der achsparallel verlaufenden Biegeachse größer, so dass ein im Rahmen der Laschenelastizität auftretender Drehschlupf des Lagerrings minimiert ist.

In einer dazu alternativen zweiten Variante soll sich der Vorsprung von einem radial zur Drehachse federnd am Spannteil angelenkten Rollbalg erstrecken. Der Rollbalg hat gegenüber den zuvor erwähnten Laschenvarianten den Vorteil, dass er lediglich in radialer Richtung hochelastisch verformbar ist, so dass auch ein im Rahmen der Laschenelastizität möglicher Restdrehschlupf des Lagerrings verhindert wird.

Die Aussparung soll in einem Umfangsbereich des Lagerrings angeordnet sein, der bezüglich des einen Teil der Wellenunwucht erzeugenden Massenschwerpunkts des Lagerabschnitts jenseits der Drehachse und dort insbesondere symmetrisch zu der durch die Drehachse und den Massenschwerpunkt aufgespannten Unwuchtebene verläuft. Die Aussparung ist folglich im lastfreien Umfangsbereich des mit Punktlast beaufschlagten Lagerrings und insbesondere diametral gegenüberliegend zur Punktlast positioniert.

Das Spannteil kann zu seiner senkrecht zur Drehachse verlaufenden Quermittelebene und/oder zur Unwuchtebene spiegelsymmetrisch sein. Im Falle der Doppelsymmetrie ist das Spannteil punktsymmetrisch und kann folglich ohne axiale Ausrichtung montiert werden.

Außerdem soll das Verschieben des Spannteils in Richtung der Drehachse formschlüssig nur durch die Schnappverbindung des Vorsprungs mit der Aussparung im Lagerring verhindert werden. Unbeschadet dessen kann dennoch die durch die elastische Verformung des eingespannten Spannteils erzeugte Reibkraft am Lagerring durch einen Stoffschluss ergänzt werden, der beispielsweise durch Verkleben des Spannteils mit dem Lagerring erzeugt wird und die formschlüssige Schnappverbindung von Verschiebekräften und Drehmomenten am Lagerring entlastet.

Weitere Merkmale der Erfindung ergeben sich aus der nachfolgenden Beschreibung und aus den Zeichnungen, in denen eine erfindungsgemäße Unwuchtwelle und vier Varianten von Spannteilen dargestellt sind. Sofern nicht anders erwähnt, sind dabei gleiche oder funktionsgleiche Bauteile oder Merkmale mit gleichen Bezugszahlen versehen.
- Figur 1: die Unwuchtwelle in perspektivischem Zusammenbau,
- Figur 2: ein erstes Spannteil in perspektivischer Darstellung,
- Figur 3: ein zweites Spannteil in perspektivischer Darstellung,
- Figur 4: ein drittes Spannteil in Draufsicht,
- Figur 5: den Schnitt A-A gemäß Figur 4 incl. des Lagerrings,
- Figur 6: ein viertes Spannteil in Draufsicht.

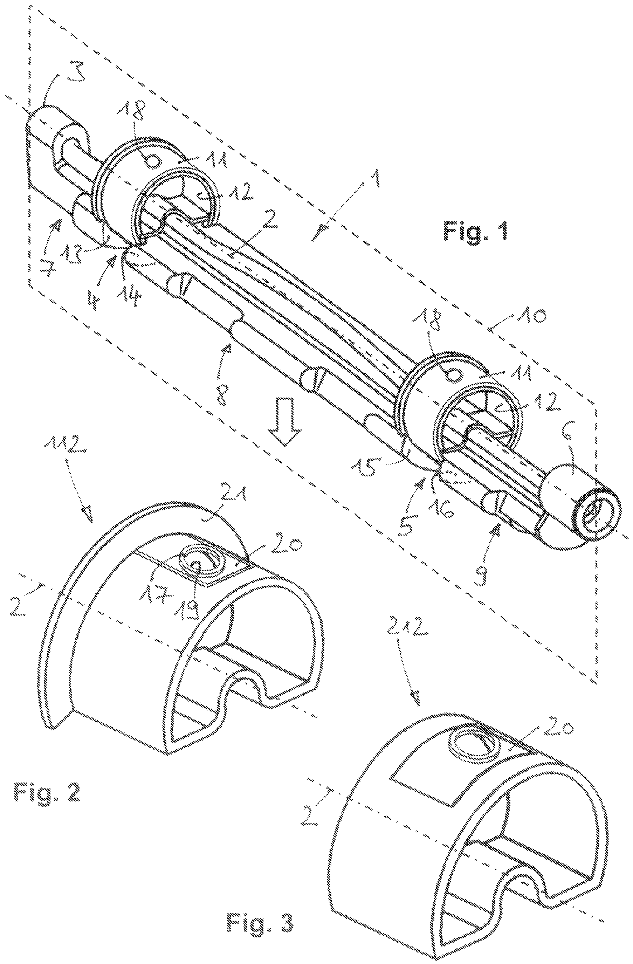

Die in Figur 1 dargestellte Unwuchtwelle 1 ist eine der beiden mit doppelter Kurbelwellendrehzahl gegenläufig rotierenden Ausgleichswellen eines auch als Lancaster-Ausgleich bekannten Massenausgleichsgetriebes einer Hubkolben-Brennkraftmaschine in Vierzylinder-Reihenbauweise. Die um ihre Drehachse 2 rotierende Unwuchtwelle 1 ist gebaut und umfasst eine aus Gussstahl hergestellte Trägerwelle 3 mit zwei Lagerabschnitten 4 und 5, an denen die Unwuchtwelle 1 radial in der Brennkraftmaschine gelagert ist. Der Antrieb der Unwuchtwelle 1 erfolgt über ein nicht dargestelltes Antriebsrad, das auf einem endseitigen Lagerzapfen 6 befestigt wird.

Die Lagerabschnitte 4, 5 haben wie die daran angrenzenden Unwuchtabschnitte 7, 8 und 9 einen zur Drehachse 2 beabstandeten Massenschwerpunkt, so dass sowohl die Unwuchtabschnitte 7, 8, 9 als auch die Lagerabschnitte 4, 5 an der Erzeugung der Wellenunwucht beteiligt sind. Diese wirkt gemäß der eingezeichneten Pfeilrichtung in einer Unwuchtebene 10, die durch die Drehachse 2 und den dazu in Pfeilrichtung beabstandeten Massenschwerpunkt der Unwuchtwelle 1 aufgespannt wird.

Die radiale Lagerung der Unwuchtwelle 1 ist als Nadellagerung ausgebildet, deren Innenlaufbahnen durch Lagerringe 11 aus Wälzlagerstahl (z.B. 100Cr6) gebildet sind. Die Lagerringe 11 umschließen vollumfänglich die Lagerabschnitte 4, 5 und jeweils ein darauf angeordnetes Spannteil 12, das der Lagerabschnitt 4, 5 formschlüssig gegen Verdrehen um die Drehachse 2 sichert. Die Spannteile 12, die der einfachen Montage und lösbaren Befestigung der Lagerringe 11 dienen, sind jeweils unter elastischer Verformung zwischen dem Lagerring 11 und den Lagerabschnitt 4, 5 eingesteckt und spannen infolge der elastischen Verformung den Lagerring 11 radial zur Drehachse 2 und entgegen der Unwuchtrichtung gegen den Lagerabschnitt 4, 5.

Der Kontaktbereich der Lagerabschnitte 4, 5 mit den infolge der mitrotierenden Wellenunwucht mit Punktlast beaufschlagten Lagerringen 11 hat die Form einer Zylinderschale, die spiegelsymmetrisch zur Unwuchtebene 10 ist und an der sich jeder Lagerring 11 konzentrisch zur Drehachse 2 ausrichtet. Die Lagerringe 11 sind jeweils von einander zugewandten Stirnflächen 13 und 14 bzw. 15 und 16 der Unwuchtabschnitte 7, 8 bzw. 8, 9, die gegenüber den dazwischen verlaufenden Lagerabschnitten 4 bzw. 5 radial vorspringen, axial eingefasst und geführt.

Die Befestigung jedes Lagerrings 11 in umfänglicher Richtung, d.h. das Sichern des Lagerrings 11 gegen Verdrehen um die Drehachse 2 relativ zum Spannteil 12 und zum Lagerabschnitt 4, 5 erfolgt erfindungsgemäß mittels einer formschlüssigen Verbindung mit dem Spannteil 12.

Das in Figur 1 montierte Spannteil 12 ist in Figur 2 vergrößert als Einzelteil dargestellt. Es handelt sich um die erste von vier erfindungsgemäßen Spannteilvarianten, die jeweils als Kunststoffspritzgießteil in Form eines in radialer Richtung elastisch verformbaren Hohlkörpers hergestellt sind. Die formschlüssige Verdrehsicherung mit dem Lagerring 11 erfolgt beim ersten Spannteil 112 mittels einer Schnappverbindung, die durch einen sich radial zur Drehachse 2 erstreckenden Vorsprung 17 am Spannteil 112 und eine dazu geringfügig größere Aussparung 18 im Lagerring 11 gebildet ist, in die der Vorsprung 17 eingeschnappt ist. Der Vorsprung 17 und die Aussparung 18 sind vorliegend kreisförmig und gemäß Figur 1 im lastfreien Umfangsbereich des Lagerrings 11, d.h. wie eingangs erläutert diametral zur Punktlast des Lagerabschnitts 4, 5 und spiegelsymmetrisch zur Unwuchtebene 10 positioniert.

Der Vorsprung 17 hat eine Öffnung 19, die das Lagerringinnere mit dem Lagerringäußeren verbindet. Das ermöglicht den Zufluss von betrieblichem Ölnebel vom Inneren des Spannteils 112 in den Wälzkontaktbereich der Lagernadeln auf dem Lagerring 11. Der Vorsprung 17 erstreckt sich von einer federnd am Spannteil 112 angelenkten Lasche 20, deren Biegeachse bei dieser ersten Spannteilvariante senkrecht zur Drehachse 2 verläuft. Das Spannteil 112 hat axial stirnseitig einen versteifenden Kragen 21, der den radialen Steifigkeitsverlust aufgrund der den Hohlkörper durchsetzenden Lasche 20 kompensiert.

Figur 3 zeigt die zweite Spannteilvariante. Das Spannteil 212 unterscheidet sich vom Spannteil 112 durch die Orientierung der Lasche 20, deren Biegeachse parallel zur Drehachse 2 verläuft. Der Kragen 21 gemäß Figur 2 kann bei dieser zweiten Spannteilvariante entfallen.

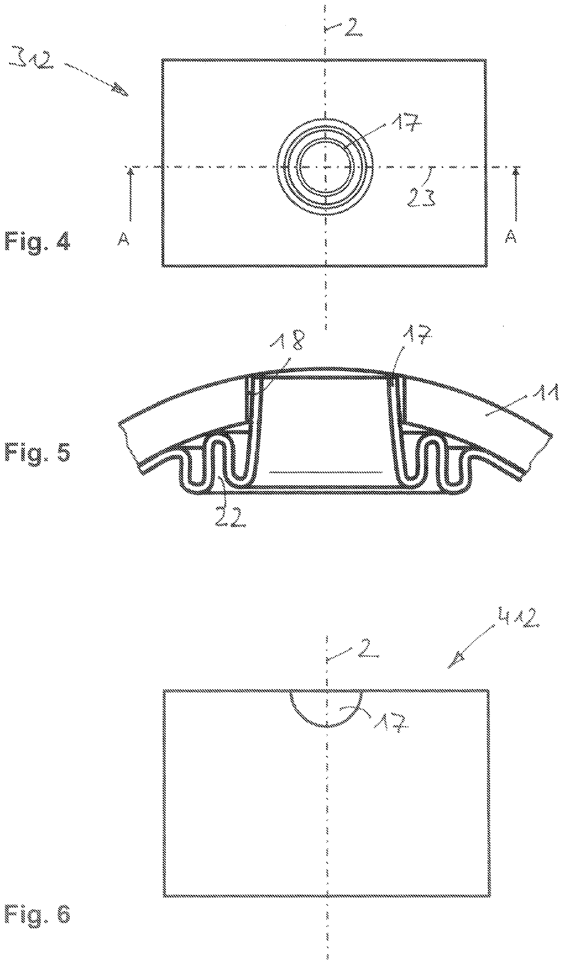

Bei der dritten Spannteilvariante gemäß den Figuren 4 und 5 erstreckt sich der in der Aussparung 18 des Lagerrings 11 eingeschnappte Vorsprung 17 von einem radial zur Drehachse 2 federnd am Spannteil 312 angelenkten Rollbalg 22.

Die Schnappverbindung der ersten drei Spannteilvarianten ist bei der vierten Variante durch einen im wesentlichen unelastischen Formschluss ersetzt. Dieser ist durch einen sich radial zur Drehachse 2 erstreckenden Vorsprung 17 am Spannteil 412 und eine dazu komplementäre Aussparung an einer der (axialen) Stirnseiten eines nicht dargestellten Lagerrings gebildet.

Die Montage erfolgt bei allen Spannteilvarianten derart, dass der Lagerring 11 mit umfänglich lastfrei ausgerichteter Aussparung 18 auf den Lagerabschnitt 4, 5 aufgefädelt und dort fixiert wird und anschließend eines der Spannteile 112 bis 412 unter radial elastischer Verformung zwischen den Lagerring 11 und den Lagerabschnitt 4, 5 eingeschoben wird, bis der Vorsprung 17 in die Aussparung 18 einschnappt (Varianten 1 bis 3) bzw. eingreift (Variante 4).

Das erste Spannteil 112 und das vierte Spannteil 412 sind nur zur Unwuchtebene 10 spiegelsymmetrisch und müssen axial gerichtet montiert werden.

Das zweite Spannteil 212 ist nur zu seiner senkrecht zur Drehachse 2 verlaufenden Quermittelebene 23 (s. Figur 4) spiegelsymmetrisch und kann axial ungerichtet montiert werden.

Das dritte Spannteil 312 ist zur Unwuchtebene 10 und zur Quermittelebene 23 spiegelsymmetrisch und folglich punktsymmetrisch. Es kann axial ungerichtet montiert werden.

Ein axiales Verschieben des ersten Spannteils 112, des zweiten Spannteils 212 und des dritten Spannteils 312 relativ zum Lagerring 11 und zum Lagerabschnitt 4, 5 wird formschlüssig nur durch die Schnappverbindung des Vorsprungs 17 mit der Aussparung 18 verhindert.

### Liste der Bezugszahlen

- 1: Unwuchtwelle
- 2: Drehachse
- 3: Trägerwelle
- 4: Lagerabschnitt
- 5: Lagerabschnitt
- 6: Lagerzapfen
- 7: Unwuchtabschnitt
- 8: Unwuchtabschnitt
- 9: Unwuchtabschnitt
- 10: Unwuchtebene
- 11: Lagerring
- 12: Spannteil (Varianten 112 bis 412)
- 13: Stirnfläche
- 14: Stirnfläche
- 15: Stirnfläche
- 16: Stirnfläche
- 17: Vorsprung
- 18: Aussparung
- 19: Öffnung
- 20: Lasche
- 21: Kragen
- 22: Rollbalg
- 23: Quermittelebene

## Patentansprüche

1. Unwuchtwelle (1) zum Ausgleich von Massenkräften und/oder Massenmomenten einer Brennkraftmaschine, umfassend:
- eine Trägerwelle (3) mit einem Lagerabschnitt (4, 5),
- ein auf dem Lagerabschnitt (4, 5) angeordnetes Spannteil (12, 112, 212, 312, 412), das der Lagerabschnitt (4, 5) formschlüssig gegen Verdrehen um die Drehachse (2) der Unwuchtwelle (1) sichert,
- und einen den Lagerabschnitt (4, 5) und das Spannteil (12, 112, 212, 312, 412) umschließenden Lagerring (11), den das Spannteil (12, 112, 212, 312, 412) radial zur Drehachse (2) gegen den Lagerabschnitt (4, 5) spannt,
**dadurch gekennzeichnet, dass** das Spannteil (12, 112, 212, 312, 412) den Lagerring (11) formschlüssig gegen Verdrehen um die Drehachse (2) sichert.

2. Unwuchtwelle (1) nach Anspruch 1, **dadurch gekennzeichnet, dass** die formschlüssige Verdrehsicherung des Lagerrings durch einen sich radial zur Drehachse (2) erstreckenden Vorsprung (17) am Spannteil (412) und eine stirnseitige Aussparung im Lagerring gebildet ist, wobei der Vorsprung (17) in die Aussparung eingreift.

3. Unwuchtwelle (1) nach Anspruch 1, **dadurch gekennzeichnet, dass** die formschlüssige Verdrehsicherung des Lagerrings (11) durch einen sich radial zur Drehachse (2) erstreckenden Vorsprung (17) am Spannteil (112, 212, 312) und eine Aussparung (18) im Lagerring (11) gebildet ist, wobei der Vorsprung (17) in die Aussparung (18) eingeschnappt ist.

4. Unwuchtwelle (1) nach Anspruch 3, **dadurch gekennzeichnet, dass** der Vorsprung (17) eine Öffnung (19) hat, die das Lagerringinnere mit dem Lagerringäußeren verbindet.

5. Unwuchtwelle (1) nach Anspruch 3 oder 4, **dadurch gekennzeichnet, dass** sich der Vorsprung (17) von einer radial zur Drehachse (2) federnd am Spannteil (112, 212) angelenkten Lasche (20) erstreckt.

6. Unwuchtwelle nach Anspruch 3 oder 4, **dadurch gekennzeichnet, dass** sich der Vorsprung (17) von einem radial zur Drehachse (2) federnd am Spannteil (312) angelenkten Rollbalg (22) erstreckt.

7. Unwuchtwelle (1) nach einem der Ansprüche 2 bis 6, **dadurch gekennzeichnet, dass** die Aussparung (18) in einem Umfangsbereich des Lagerrings (11) angeordnet ist, der bezüglich des einen Teil der Wellenunwucht erzeugenden Massenschwerpunkts des Lagerabschnitts (4, 5) jenseits der Drehachse (2) verläuft.

8. Unwuchtwelle (1) nach einem der vorhergehenden Ansprüche, **dadurch gekennzeichnet, dass** das Spannteil (112, 212, 312, 412) zu seiner senkrecht zur Drehachse (2) verlaufenden Quermittelebene (23) und/oder zu der durch die Drehachse (2) und den Massenschwerpunkt des Lagerabschnitts (4, 5) aufgespannten Unwuchtebene (10) spiegelsymmetrisch ist.

9. Unwuchtwelle (1) nach einem Ansprüche 3 bis 8, **dadurch gekennzeichnet, dass** ein Verschieben des Spannteils (112, 212, 312) in Richtung der Drehachse (2) formschlüssig nur durch die Schnappverbindung des Vorsprungs (17) mit der Aussparung (18) im Lagerring (11) verhindert ist.

## Claims

1. An unbalanced shaft (1) for balancing inertia forces and/or inertia moments of an internal combustion engine, comprising:
- a support shaft (3) having a bearing section (4, 5),
- a tensioning part (12, 112, 212, 312, 412) arranged on the bearing section (4, 5), which the bearing section (4, 5) secures against rotation about the axis of rotation (2) of the unbalanced shaft (1) in a form-fitting manner,
- and a bearing ring (11) surrounding the bearing section (4, 5) and the tensioning part (12, 112, 212, 312, 412), which the tensioning part (12, 112, 212, 312, 412) tensions against the bearing section (4, 5) radially relative to the axis of rotation (2),
**characterised in that** the tensioning part (12, 112, 212, 312, 412) secures the bearing ring (11) against rotation about the axis of rotation (2) in a form-fitting manner.

2. The unbalanced shaft (1) according to claim 1, **characterised in that** the form-fitting securing of the bearing ring against rotation is formed by a projection (17) on the tensioning part (412) extending radially relative to the axis of rotation (2) and a front-side recess in the bearing ring, wherein the projection (17) engages in the recess.

3. The unbalanced shaft (1) according to claim 1, **characterised in that** the form-fitting securing of the bearing ring (11) against rotation is formed by a projection (17) on the tensioning part (112, 212, 312) extending radially relative to the axis of rotation (2) and a recess (18) in the bearing ring (11), wherein the projection (17) is snapped into the recess (18).

4. The unbalanced shaft (1) according to claim 3, **characterised in that** the projection (17) has an opening (19) that connects the inside of the bearing ring to the outside of the bearing ring.

5. The unbalanced shaft (1) according to claim 3 or 4, **characterised in that** the projection (17) extends from a bracket (20) that is resiliently articulated on the tensioning part (112, 212) radially relative to the axis of rotation (2).

6. The unbalanced shaft according to claim 3 or 4, **characterised in that** the projection (17) extends from a rolling bellows (22) that is resiliently articulated on the tensioning part (312) radially relative to the axis of rotation (2).

7. The unbalanced shaft (1) according to any one of claims 2 to 6, **characterised in that** the recess (18) is arranged in a peripheral region of the bearing ring (11) that extends beyond the axis of rotation (2) with respect to the centre of mass of the bearing section (4, 5) that generates part of the shaft unbalance.

8. The unbalanced shaft (1) according to any one of the preceding claims, **characterised in that** the tensioning part (112, 212, 312, 412) is mirror-symmetrical with respect to its transverse centre plane (23) extending perpendicular relative to the axis of rotation (2) and/or with respect to the unbalanced plane (10) spanned by the axis of rotation (2) and the centre of mass of the bearing section (4, 5).

9. The unbalanced shaft (1) according to any one of claims 3 to 8, **characterised in that** a displacement of the tensioning part (112, 212, 312) in the direction of the axis of rotation (2) is prevented in a form-fitting manner only by the snap connection of the projection (17) to the recess (18) in the bearing ring (11).

## Revendications

1. Arbre à balourd (1) destiné à compenser des forces et/ou des couples de masse d'un moteur à combustion interne, comprenant :
- un arbre porteur (3) pourvu d'une partie d'appui (4, 5),
- une partie de serrage (12, 112, 212, 312, 412) disposée sur la partie d'appui (4, 5) et empêchant la partie d'appui (4, 5) de tourner sur l'axe de rotation (2) de l'arbre à balourd (1) par complémentarité de formes,
- et une bague de palier (11) entourant la partie d'appui (4, 5) et la partie de serrage (12, 112, 212, 312, 412) et serrant la partie de serrage (12, 112, 212, 312, 412) contre la partie d'appui (4, 5) radialement à l'axe de rotation (2),
**caractérisé en ce que** la partie de serrage (12, 112, 212, 312, 412) empêche la bague de palier (11) de tourner sur l'axe de rotation (2) par complémentarité de formes.

2. Arbre à balourd (1) selon la revendication 1, **caractérisé en ce que** la protection anti-rotation par complémentarité de formes de la bague de palier est formée par une saillie (17) sur la partie de serrage (412) s'étendant radialement à l'axe de rotation (2) et un évidement côté avant dans la bague de palier, la saillie (17) venant en prise dans l'évidement.

3. Arbre à balourd (1) selon la revendication 1, **caractérisé en ce que** la protection anti-rotation par complémentarité de formes de la bague de palier (11) est formée par une saillie (17) sur la partie de serrage (112, 212, 312) s'étendant radialement à l'axe de rotation (2) et un évidement (18) dans la bague de palier (11), la saillie (17) étant encliquetée dans l'évidement (18).

4. Arbre à balourd (1) selon la revendication 3, **caractérisé en ce que** la saillie (17) présente une ouverture (19) qui relie l'intérieur de la bague de palier à l'extérieur de la bague de palier.

5. Arbre à balourd (1) selon la revendication 3 ou 4, **caractérisé en ce que** la saillie (17) s'étend depuis une patte (20) articulée élastiquement sur la partie de serrage (112, 212) radialement à l'axe de rotation (2).

6. Arbre à balourd selon la revendication 3 ou 4, **caractérisé en ce que** la saillie (17) s'étend à partir d'un soufflet roulant (22) articulé élastiquement sur la partie de serrage (312) radialement à l'axe de rotation (2).

7. Arbre à balourd (1) selon l'une quelconque des revendications 2 à 6, **caractérisé en ce que** l'évidement (18) est disposé dans une zone périphérique de la bague de palier (11) qui, par rapport au centre de gravité de la partie d'appui (4, 5) qui génère une partie du balourd de l'arbre, s'étend au-delà de l'axe de rotation (2).

8. Arbre à balourd (1) selon l'une quelconque des revendications précédentes, **caractérisé en ce que** la partie de serrage (112, 212, 312, 412) est symétrique en miroir à son plan médian transversal (23) s'étendant perpendiculairement à l'axe de rotation (2) et/ou au plan de balourd (10) passant par l'axe de rotation (2) et le centre de gravité de la partie d'appui (4, 5).

9. Arbre à balourd (1) selon l'une quelconque des revendications 3 à 8, **caractérisé en ce qu'**un déplacement de la partie de serrage (112, 212, 312) dans le sens de l'axe de rotation (2) par complémentarité de formes ne peut être empêché que par la liaison par encliquetage de la saillie (17) avec l'évidement (18) dans la bague de palier (11).
